(19) Europäisches Patentamt
European Patent Office
Office européen des brevets

(11) **EP 4 451 216 A1**

(12) **EUROPEAN PATENT APPLICATION**

(43) Date of publication:
**23.10.2024 Bulletin 2024/43**

(51) International Patent Classification (IPC):
**G06T 7/90** *(2017.01)* **G06T 15/00** *(2011.01)*

(21) Application number: **23168780.7**

(22) Date of filing: **19.04.2023**

(52) Cooperative Patent Classification (CPC):
**G06T 7/90; G06T 15/506;** G06T 2207/10024;
G06T 2207/10028; G06T 2207/20081;
G06T 2207/20084; G06T 2207/30164;
G06T 2207/30261

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH**
**70442 Stuttgart (DE)**

(72) Inventors:
• **Xing, Xiaoyan**
**1096CJ Amsterdam (NL)**
• **Karaoglu, Sezer**
**1087MC Amsterdam (NL)**
• **Gevers, Theo**
**1091HR Amsterdam (NL)**
• **Groh, Konrad**
**70193 Stuttgart (DE)**

(54) **DEVICE AND METHOD FOR DETERMINING AN ALBEDO AND A SHADING OF AN OBJECT**

(57) Computer-implemented method (700, 800) for training a machine learning system (70), wherein the machine learning system (70) is configured for determining an albedo ($a$) and a shading ($s$) of an object, the method (700, 800) for training comprising the steps of:
• Obtaining (701) a plurality of measurements ($p$), wherein a measurement from the plurality of measurements ($p$) characterizes a measurement of spatial location of a point located on an object and a measurement of a color of the object at the point;
• Determining (702), by the machine learning system (70), a direction of light ($l$) shining on the object by using the plurality of measurements ($p$) as input;
• Determining (703) surface normal vectors ($n$) at the measurements of spatial locations;
• Determining (704), by the machine learning system (70), a shading ($s$) of the object based on the determined surface normal vectors ($n$) and the determined direction of the light ($l$);
• Determining (705), by the machine learning system (70), an albedo ($a$) by using the plurality of measurements ($p$) as input;
• Determining (706) a reconstruction of the colors of the plurality of measurements ($p$) based on the determined shading ($s$) and the determined albedo ($a$);
• Training (707) the machine learning system (70) based on a first loss function, wherein the first loss function comprises a term characterizing a difference between the colors of the plurality of measurements ($p$) and the reconstruction of the colors of the plurality of measurements.

**Fig. 3**

**Description**

Technical field

The invention concerns a computer-implemented method for training a machine learning system, a method for using the machine learning system to determine an albedo and a shading of an object, a method for determining a training dataset, a method for training an image classifier, a method for classifying images, a training system, a control system, a computer program, and a machine-readable storage medium.

Prior art

Janner et al. "Self-Supervised Intrinsic Image Decomposition", 2018, available at https://arxiv.org/pdf/1711.03678.pdf discloses a method for learning an intrinsic image decomposition by explaining the input image.
Ranftl et al. "Towards Robust Monocular Depth Estimation: Mixing Datasets for Zero-shot Cross-dataset Transfer", 2020, available at https://arxiv.org/abs/1907.01341v3 discloses a method for monocular depth estimation.
Qi et al. "PointNet: Deep Learning on Point Sets for 3D Classification and Segmentation", 2017, available at https://arxiv.org/pdf/1612.00593.pdf discloses a neural network architecture known as PointNet.

Technical background

Intrinsic imaging or intrinsic image decomposition has traditionally been described as the problem of decomposing an image into two layers: a reflectance, the albedo or invariant color of an object depicted in the image, and a shading, produced by the interaction between light and geometry of the object.
Being able to decompose an image according to intrinsic imaging is an import enabling technology for a variety of different tasks. For example, being able to determine an albedo and a shading of an object in an image allows for re-rendering the image from different viewpoints and/or with different lighting directions. This is especially relevant for machine learning-based image analysis systems like image classifiers as it allows for an easy way of producing large training and test datasets without the necessity of recording a scene under different lighting conditions and/or different viewpoints.
The inventors surprisingly found that, while known methods for intrinsic image decomposition rely on data made of RGB, RGBD, or RGB normal vectors, point cloud representations are more suitable for machine learning-based intrinsic image decomposition as the resulting albedos and shadings are more accurate.

Disclosure of the invention

In a first aspect, the invention hence concerns a computer-implemented method for training a machine learning system, wherein the machine learning system is configured for determining an albedo and a shading of an object, the method for training comprising the steps of:

- Obtaining a plurality of measurements, wherein a measurement from the plurality of measurements characterizes a measurement of spatial location of a point located on an object and a measurement of a color of the object at the point;
- Determining, by the machine learning system, a direction of light shining on the object by using the plurality of measurements as input;
- Determining surface normal vectors at the measurements of spatial locations;
- Determining, by the machine learning system, a shading of the object based on the determined surface normal vectors and the determined direction of the light;
- Determining, by the machine learning system, an albedo by using the plurality of measurements as input;
- Determining a reconstruction of the colors of the plurality of measurements based on the determined shading and the determined albedo;
- Training the machine learning system based on a first loss function,
  wherein the first loss function comprises a term characterizing a difference between the colors of the plurality of measurements and the reconstruction of the colors of the plurality of measurements.

The plurality of measurements may especially be understood as a plurality of points, also referred to as point cloud. Each point in the point cloud characterizes geometric aspect and color aspects of an object depicted in an image. A point of the point cloud (i.e., a measurement) characterizes a measurement of spatial location of a point located on an object and a measurement of a color of the object at the point. A spatial location may especially be expressed as a three-dimensional coordinate of the object at the point. For example, the object may be represented by a collection of three-dimensional points that are connected in a mesh and represent a hull of the object in 3D space. Each three-dimensional point may be understood as "sitting" on the object. The object has a distinct color at each such point, wherein, according to intrinsic imaging, the color depends on an albedo of the object at the point and a shading of the object at the point.

The spatial coordinates from the plurality of measurements can be considered to form a three-dimensional mesh that represents a virtual approximation of the object. Each vertex in this mesh represents a spatial measurement of a measurement, wherein each vertex is further assigned a property of the color of the object at the respective spatial measurement.

The spatial locations of the points and the colors at the points can be measured. For example, a three-dimensional sensor such as a LIDAR or a radar may be used for determining the spatial locations of different points on the object and a camera may be used for determining colors of the object. Through intrinsic and extrinsic parameters, the spatial locations and the colors can be aligned such that each spatial location can be assigned a corresponding color. Obtaining the point cloud (plurality of measurements) may then be understood as retrieving such a combination of spatial locations and colors, e.g., from a database.

However, the point cloud (plurality of measurements may also be obtained differently, especially based on RGBD images or based on RGB images. For RGBD images, the spatial locations may be determined from camera intrinsic and extrinsic parameters, wherein each depth measurement automatically corresponds to a pixel and a spatial location determined for a specific depth value hence also corresponds to the pixel. The pixel values from the RGB part of the RGBD image and the corresponding spatial locations in three-dimensional space may then be fused together in order to obtain the point cloud.

For RGB images, spatial coordinates may be predicted for each pixel, e.g., by first determining a depth value for each pixel by means of a monocular depth estimation method like MiDaS and then determining the spatial locations as was done for an RGBD image.

Obtaining the plurality of measurements may hence be achieved in a plurality of ways. Preferably, each measurement of the plurality of measurements is given by a six-dimensional vector (or point) comprising three dimensions for the three spatial dimension and three dimensions for three color channels, e.g., RGB.

For training the machine learning system, the plurality of measurements is provided to the machine learning system, which uses the plurality of points as input in order to predict an albedo and a shading of the object characterized by the plurality of measurements. Predicting the albedo and the shading may be understood as determining an albedo value and a shading value for each measurement in the plurality of measurements. If the plurality of measurements is obtained using an RGB image, an RGBD image, or a dense point cloud obtained form an RGB image and a three-dimensional sensor as described above, the determined albedo and shading may in turn also be understood as images, each comprising pixels corresponding to pixels characterized by the plurality of measurements.

Preferably, the albedo is determined by a providing the plurality of measurements as input to a first part of the machine learning system and providing an output of the first part as albedo and/or wherein the direction of light is determined by providing the plurality of measurements to a second part of the machine learning system and providing an output of the second part as direction of the light and/or wherein the shading is determined by providing the determined surface normal vectors and the determined direction of the light to a trainable shader and providing an output of the trainable shader as shading.

The first part, second part, and/or shader are preferably given in the form of a neural network, even more preferably a neural network according to the PointNet architecture or a PointNet-like architecture. The point net architecture may especially be adapted to only use the "classification network" part of the architecture and adapt the number of output scores for each measurement according to the desired output (e.g., three outputs per measurement for the albedo, one output per measurement for the shading, and three outputs for the entire plurality of measurements for the direction of the light). Advantageously, the inventors found that a prediction accuracy of albedo and shading can be improved when using neural networks for the first part, the second part, and/or the shader, especially of all of the first part, second part, and the shader are given by neural networks. The first part, second part, and trainable shader may also be given by a multitask neural network, wherein the multitask neural network has a head for predicting the albedo, direction of the light, and shading respectively.

The trainable shader may also be referred to as learnable shader.

When referring to "providing an output of a machine learning system as a value", it is implicitly understood that the output may also be post-processed (e.g., normalized) before being provided as value.

The surface normal vectors determined as part of the method may be understood as assigning each spatial location of a measurement a normal vector with respect to the surface the spatial location "sits" on. Determining the surface normal vectors may be achieved with any method for determining normal vectors in point clouds. Preferably, for each measurement a local neighborhood is determined for the spatial coordinates of each measurement (that is, a neighborhood of only the spatial coordinates of the plurality of measurements), a covariance matrix is determined from the local neighborhood and the spatial coordinate, and an eigen vector corresponding to the smallest eigen value of the covariance matrix is used as normal vector of the measurement. The number of neighbors to be determined for each spatial coordinate can be considered a hyperparameter of the method. Determining the surface normal may, in general, by achieved by a specific module of the machine learning system or provided to the shader from an external module.

Having determined the albedo and the shading, the original color components of point cloud can then be reconstructed by, e.g., point-wise multiplication of the determined albedo and the determined shading. This reconstructed point cloud is used for training the machine learning system by training the machine learning system based on a loss function that comprises a term characterizing a difference between the original colors of the point cloud (i.e., the plurality of measurements) and the reconstructed colors. The term may be characterized by the formula:

$$\mathcal{L}_{rec} = \left| I - \hat{I} \right|_2^2,$$

wherein $I$ are the color components of the point cloud and $\hat{I}$ is the reconstruction. Preferably, the term further characterizes a difference between the determined albedo and a desired albedo. The first loss function may hence preferably be characterized by the formula:

$$\mathcal{L}_{rec} = \left| A - \hat{A} \right|_2^2 + \left| I - \hat{I} \right|_2^2,$$

wherein $A$ is the desired albedo and $\hat{A}$ is the determined albedo.

In general, training an entity (e.g., the machine learning system, first part, second part, trainable shader) based on a loss function may especially be understood as running an optimization of parameters of the entity using the loss function as function to be optimized. Preferably, this may be achieved by a gradient descent method. Hence, the steps are preferably repeated iteratively, wherein each iteration comprises optimizing with respect to a plurality of point clouds, i.e., a batch of point clouds.

In general, when referring to a term of a loss function "characterizing a difference between x and y" this may preferably be understood as the term being a Euclidean distance or a squared Euclidean distance of the entities x and y. If a Euclidean distance or squared Euclidean distance is used on tensors (e.g., an albedo and a desired albedo) the term may be understood as determining Euclidean or squared Euclidean distances for each corresponding element in the tensors and the term then evaluating to a mean of the determined distances.

Surprisingly, the inventors found that using point clouds of spatial measurements and color measurements as input to the machine learning system allows for an improved prediction of the albedo and the shading, i.e., a more accurate estimate of the true albedo and the true shading. As an additional advantage, the authors found that the machine learning system can be trained using only a fraction of the pixels of an image while still maintaining an improved performance. The authors found that the number of pixels to be used when determining the plurality of measurements can be as low as a hundredth of the total number of pixels used in the image. This in turn greatly reduces the computational complexity and speeds up the training process.

In preferred embodiments, the first loss function further comprises a term that characterizes a difference of gradients of the determined albedo and gradients of a desired albedo and/or wherein the first loss function further comprises a term that characterizes a cross correlation loss between the determined albedo and the desired albedo.

The inventors found that, advantageously, one or both of these additional terms used in the loss function supply even more information to the machine learning system in terms of the albedo being smooth and the different color channels of the albedo to be consistent and hence improve the performance of the machine learning system even further.

The term "gradients of the determined albedo" can be understood in so far as the albedo determined from the first part characterizes (at least parts of) an image. For each albedo an image gradient may hence be determined. If he plurality of measurements does not characterize an entire image (e.g., when not using an entire RGB image or an entire RGBD image) but is a sparser point cloud, the gradients may be determined as follows: Each albedo corresponds to a measurement and thereby to a spatial coordinate one can then determine neighboring measurements in terms of the closest spatial coordinates of other measurements and obtain their albedo from the first part. A gradient may then be determined according to the determined neighbors.

The term characterizing the difference of gradients may especially be characterized by the formula:

$$\mathcal{L}_{grad} = \left| \nabla A - \nabla \hat{A} \right|_2^2,$$

wherein $\nabla A$ ist the gradient of the desired albedo (e.g., a ground truth albedo) and $\nabla \hat{A}$ is the gradient of determined albedo.

The cross correlation loss term may especially characterize pairwise differences between color channels of the determined albedo and color channels. For example, when using RGB images, the cross correlation term may be characterized by the formula:

$$\mathcal{L}_{ccr} = \left| A_{RG} - \hat{A}_{RG} \right| + \left| A_{RB} - \hat{A}_{RB} \right| + \left| A_{BG} - \hat{A}_{BG} \right|,$$

wherein the lower index indicates the channels, e.g., $A_{RG}$ characterizes the red and green channels of the desired albedo, $\hat{A}_{RG}$ characterizes the red and green channel of the determined albedo.

The first loss function may hence preferably be characterized by the formula:

$$\mathcal{L}_{first} = a_{rec} \cdot \mathcal{L}_{rec} + a_{grad} \cdot \mathcal{L}_{grad} + a_{ccr} \cdot \mathcal{L}_{ccr},$$

wherein $a_{rec}$, $a_{grad}$, and $a_{ccr}$ characterize factors of the respective terms, which may be considered hyperparameters of the method for training. Preferably, the factors may all be set to 1 but other values are possible as well. The first loss function or any combination of terms may also be scaled by the reciprocal of the number of measurements in the plurality of measurements.

In the preferred embodiments, the second part and/or the trainable shader are preferably additionally trained based on a second loss function, wherein the second loss function comprises a term characterizing a difference between the determined light direction and a desired light direction and/or wherein the loss function comprises a term characterizing a difference between the determined shading and a desired shading.

This may be understood as a supervised training of second part and/or the trainable shader. The loss term of the second loss function may especially be characterized by the formula:

$$\mathcal{L}_{shading} = \left| L - \hat{L} \right|_2^2 + \left| S - \hat{S} \right|_2^2,$$

Wherein $L$ is the desired direction of the light, $\hat{L}$ is the determined direction of the light, $S$ is the desired shading, and $\hat{S}$ is the determined shading.

Preferably, the second part and the trainable shader are trained based on the second loss function in a first stage and the first part is then trained based on the first loss function in a subsequent second stage.

The approach may be understood as a supervised pre-training of the second part and the trainable shader, followed by a subsequent supervised training of the first part. Parameters of the second part and the trainable shade may especially be "frozen" during the second stage thus only training the first part in a second stage. The inventors found that the two stage training process allows for a faster convergence of training and hence an improvement in terms of computing time, which leads to fewer resource requirements.

In another aspect, the invention concerns a computer-implemented method for determining an albedo and a shading of an object using a machine learning system trained with the method described above.

This aspect may be understood as the inference counterpart to the training method. The term "using a machine learning system trained with the method" may especially be understood that training is not part of the inference method but is finished before the method is run. Alternatively, it may also be understood as the method for determining an albedo and a shading comprising the steps of the training method according to any one embodiment as presented above.

In another aspect, the invention concerns a computer-implemented method for creating a training dataset comprising images for training an image classifier, wherein the method comprises the steps of:

- Obtaining a plurality of measurements, wherein a measurement from the plurality of measurements characterizes a measurement of spatial location of a point located on an object and a measurement of a color of the object at the point;
- Determining an albedo using a machine learning system that has been trained with the method according to any one of the embodiments of the method for training presented above;
- Determining surface normal vectors at the measurements of spatial locations;
- Selecting a desired lighting direction;
- Determining, by the machine learning system, a shading based on the determined surface normal vectors and the desired direction of the light;
- Determining an image based on the determined albedo and the determined shading.

- Adding the image to the training dataset.

This method may be understood as an application of a machine learning system trained with the method according to any one of the embodiments presented above. The term "using a machine learning system trained with the method" may especially be understood that training is not part of the inference method but is finished before the method is run. Alternatively, it may also be understood as the method for determining an albedo and a shading comprising the steps of the training method according to any one embodiment as presented above.
The plurality of measurements may be obtained according to the different embodiments for obtaining a plurality of measurements in the method for training as described above.

The albedo and surface normal vectors may also be determined as is done in the method for training.

The lighting direction may be understood as a free parameter in the method. Especially selecting a lighting direction that is different from a lighting direction characterized by the plurality of measurements allows for synthesizing an image which is different in terms of lighting compared to the one characterized by the plurality of measurements.

The lighting direction may be selected randomly. That is, a lighting direction may be drawn at random from a predefined probability distribution, e.g., a uniform distribution on a sphere in three-dimensional space, preferably a half sphere in three-dimensional space characterizing a direction of possible light from above ground level.

Alternatively, the lighting direction may also be selected by predicting a lighting direction from the machine learning system by means of inputting the plurality of measurements and then adding an offset to the direction, preferably a random offset.

The selected lighting direction can then be used to determine a shading, e.g., by inputting it to a trainable shader of the machine learning system. The shading can then be applied to the albedo, e.g., by point-wise multiplication to determine the image. This process may be understood as synthesizing the image.

Preferably, a plurality of lighting directions may be selected, e.g., at random or in a grid covering a desired range of directions, e.g., a grid on a three-dimensional sphere or half-sphere as described above.

Advantageously, the method allows for synthesizing images corresponding to various lighting directions. In turn, this leads to the image classifier being trained with a training dataset as provided by the method to become more robust with respect to different lighting directions, i.e., the performance of the image classifier is improved.

In another aspect, the invention concerns a computer-implemented method for training an image classifier comprising the steps of:

- Obtaining a training image and spatial locations for pixels of the training image;
- Determining an albedo by providing the pixels and the corresponding special locations as input to a machine learning system, wherein the machine learning system has been trained with the method according to any one of the embodiments described above;
- Training the image classifier using the albedo as input to the image classifier.

The term "using a machine learning system trained with the method" may especially be understood that training is not part of the inference method but is finished before the method is run. Alternatively, it may also be understood as the method for determining an albedo and a shading comprising the steps of the training method according to any one embodiment as presented above.

The method may be understood to comprise a preprocessing of the training image by determining the albedo of the training image and to train the image classifier based on the albedo as input. This approach removes shadows from the training image and makes the image classifier hence robust with respect to different lighting directions or shading situations.

The spatial locations may be determined as described in the method for training the machine learning system. Training the image classifier may be conducted in a supervised, semi-supervised, or unsupervised fashion with common machine learning techniques for training an image classifier. The image classifier may especially be a neural network.

Advantageously, removing the shading when classifying images leads to an effective pre-processing method, which can be understood as a form of normalization. The removed shading can no longer serve as a "distraction" for the image classifier. The inventors found that this surprisingly leads to an improved accuracy of the image classifier.

In another aspect, the invention further concerns a computer-implemented method for classifying an image comprising the steps of:

- Obtaining an image and spatial locations for pixels of the image;
- Determining an albedo by providing the pixels and the corresponding special locations as input to a machine learning system, wherein the machine learning system has been trained with the method according to any one of the claims 1 to 6;
- Classifying the image by using the determined albedo as input to an image classifier that has been trained with the method for training the image classifier as described above.

This method may be understood as the inference counterpart to the method for training the image classifier as described above. The machine learning system serves as a form of pre-processing during inference in order to remove shading from the images to be classified.

Embodiments of the invention will be discussed with reference to the following figures in more detail. The figures show:

Figure 1    a machine learning system;

Figure 2    a PointNet-like neural network;

Figure 3    a method for training the machine learning system;

Figure 4    a preferred embodiment of the method for training;

Figure 5    a method for creating a training dataset;

Figure 6    a training system for training an image classifier with the training dataset;

Figure 7    a control system comprising image classifier for controlling an actuator in its environment;

Figure 8    the control system controlling an at least partially autonomous robot;

Figure 9    the control system controlling a manufacturing machine.

Description of the embodiments

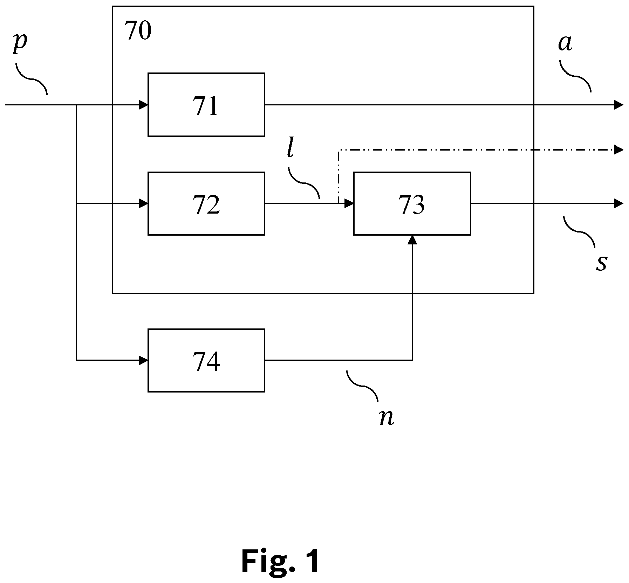

Figure 1 shows a machine learning system (70) configured for determining an albedo (*a*) and a shading (*s*) of an object. As input, the machine learning system receives a plurality of measurements (*p*) (also referred to as a point cloud), wherein each measurement from the plurality of measurements (*p*) comprises a spatial location of a point located on an object and a color of the object at this point. The machine learning system (70) is configured to determine the albedo (*a*) and the shading (*s*) based on the plurality of measurements (*p*).

Preferably, this is achieved by providing the plurality of measurements (*p*) to a first part (71) of the machine learning system (70), wherein the first part is preferably a neural network, e.g., a neural network having a PointNet or PointNet-like architecture. The first part (71) is configured to determine the albedo (*a*) based on the plurality of measurements (*p*). The plurality of measurements (*p*) may further be provided to a second part (72) of the machine learning system, wherein the second part (72) is configured to determine a direction of a light (*l*) shining on the object depicted by the plurality of measurements (*p*).

The shading (*s*) may preferably be determined by a trainable shader (73) of the machine learning system (70). The trainable shader (73) takes as input the determined direction of light (*l*). Additionally, the trainable shader (73) is provided a plurality of surface normal vectors (*n*). The surface normal vectors (*n*) are preferably determined by a surface normal vector module (74), which is configured to determine the surface normal vectors (*n*) based on the plurality of measurements (*p*). Preferably, the surface normal vector module (74) takes the spatial locations from the plurality of measurements (*p*) and determines the surface normal vectors (*n*) from these spatial locations. Preferably, this is achieved by determining for each spatial location a plurality of neighboring spatial locations, determining a covariance matrix from the neighboring spatial locations and the spatial location, and an eigenvector corresponding to the smallest eigenvalue of the covariance matrix as the surface normal vector corresponding to the spatial location and hence the measurement from the plurality of measurements (*p*) the spatial location was taken from. The eigenvector may also be normalized before being provided as surface normal vector.

The trainable shader (73) may preferably also be a neural network, especially a neural network following a PointNet or PointNet-like architecture.

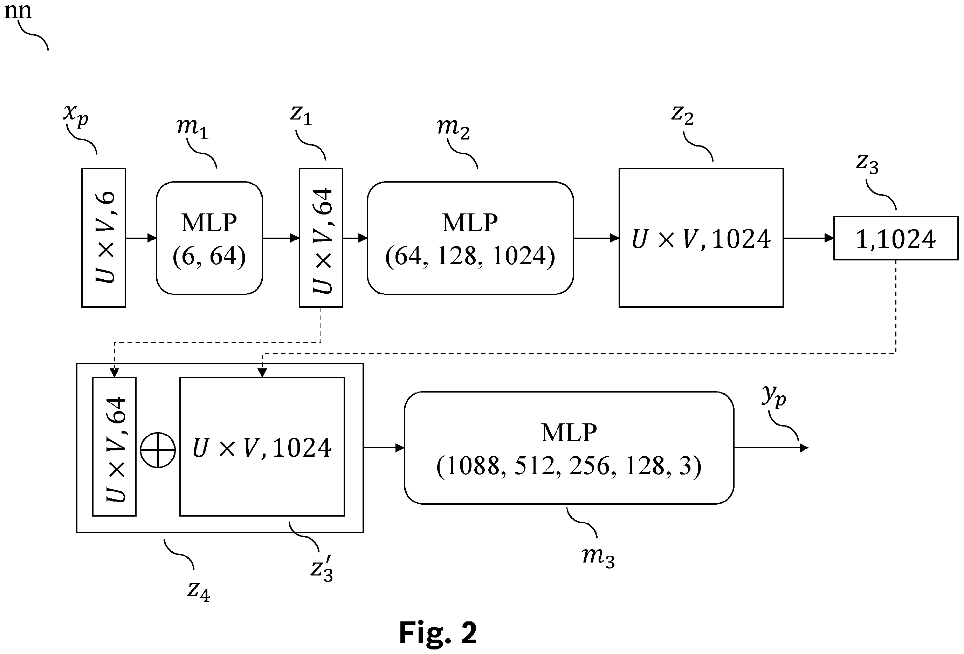

Figure 2 shows a preferred PointNet-like neural network (nn) for use in the invention. In Figure 2, boxes with sharp edges indicate representations of data, while boxes with rounded edges indicate multilayer perceptrons that can be considered sub-neural networks of the neural network (nn). Representations of data further comprise a tuple of numbers indicating a preferred dimensionality of the data. For example, $U \times V$, 6 indicates a matrix having a height that is a result of multiplying a variable *U* with a variable *V* and a width of 6. Multilayer perceptrons are indicated by the abbreviation MLP, further amended by tuples of number indicating layer dimensionalities of the respective MLP. For example, the expression "MLP(64, 128, 1024)" can be understood as a multilayer perceptron having an input layer size of 64, a hidden layer output size of 128 and an output layer size of 1024.

The neural network (nn) is provided an input ($x_p$), which can be considered a point cloud. When using the neural network as the first part (71), second part (72) or trainable shader (73) of the machine learning system (70), the input ($x_p$) is preferably a point cloud, wherein each point has a dimensionality of six. For example, a measurement from the plurality of measurements ($p$) may be characterized by a six-dimensional vector (three spatial coordinates and three color channels). The input ($x_p$) may preferably be provided in terms of a matrix with a height dimension of the matrix indexing the points of the point cloud (e.g., measurements of the plurality of measurements ($p$)). Alternatively, the input ($x_p$) may also be given in form of a three-dimensional tensor comprising a height dimension (indicated as $U$ in the figure) and a width dimension (indicated as $V$ in the figure), e.g., when using RGB images for creating the point cloud (wherein $U$ and $V$ can then be considered a height and width of an image respectively).

Irrespective of the representation, the points in the input ($x_p$) are preferably processed individually by a first MLP ($m_1$), which provides a first intermediate representation ($z_1$). The first intermediate representation ($z_1$) is then used as input to a second MLP ($m_1$), which provides a second intermediate representation ($z_2$). Based on the second intermediate representation ($z_2$) a third intermediate representation ($z_3$) is then obtained by means of a global max pooling operation. Being the result of a max pooling operation, the third representation ($z_3$) is a vector. The third representation ($z_3$) is then concatenated with the first representation ($z_1$) in order to form a fourth representation ($z_4$). Concatenation is preferably achieved by first broadcasting the third representation ($z_3$) according to the first dimension of the first representation ($z_1$), thereby forming a broadcasted third representation ( $z_3'$ ). The broadcasted third representation ( $z_3'$ ) and the first representation ($z_1$) are then concatenated along the second dimension to form the fourth representation ($z_4$). The fourth representation ($z_4$) is then used as input to a third MLP ($m_3$), wherein an output ($y$) of the third MLP ($m_3$) is provided as output of the neural network (nn).

When using the neural network (nn) as trainable shader (73), the surface normal vectors ($n$) and the direction of the light ($l$) may preferably be concatenated to serve as input for the trainable shader (73). For this, the second part (72) may preferably output the direction of the light ($l$) broadcasted according to the number of surface normal vectors ($n$) (in the embodiment, also $U \times V$). Alternatively, if the second part (72) outputs a single direction of light ($l$), e.g., a single three-dimensional vector, the direction of light ($l$) may be broadcasted according to the number of surface normal vectors ($n$). In both cases, the input ($x_p$) to the trainable shader (73) may then be determined by concatenating the determined surface normal vectors ($n$) and the broadcasted direction of the light ($l$) along the second dimension.

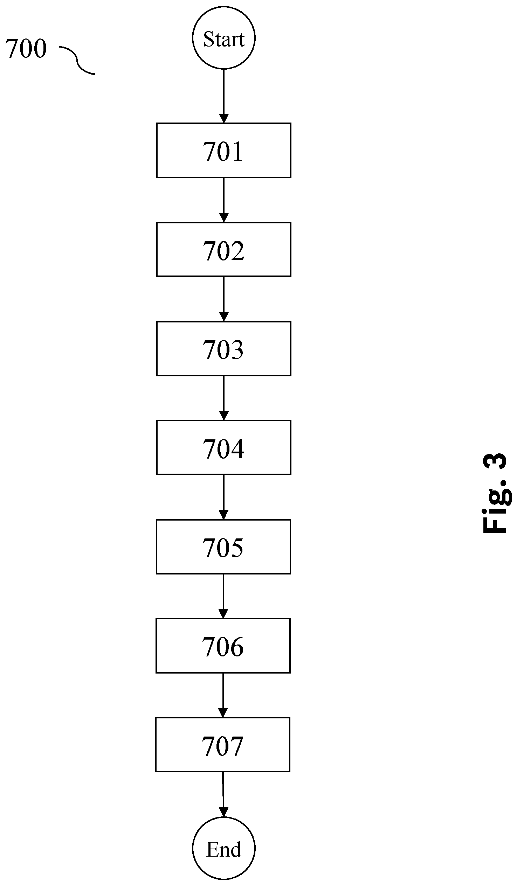

Figure 3 shows a computer-implemented method (700) for training the machine learning system (70).

In a first step (701), a plurality of measurements ($p$) is obtained, wherein a measurement from the plurality of measurements ($p$) characterizes a measurement of spatial location of a point located on an object and a measurement of a color of the object at the point. In the embodiment, the plurality of measurements may especially be obtained from an image, e.g., an RGB image. The image may be fed to a monocular depth estimation method, e.g., MiDaS, in order to extract a depth information for each pixel. Based on the depth information, three-dimensional coordinates may then be determined, e.g., by using a fictive point such as the camera position as origin. This way, each pixel is assigned a spatial location. The color channels of a pixel and its assigned spatial coordinate may then be fused together to form a measurement, with at least a subset of all pixels of the image then serving as plurality of measurements. Preferably, all pixels are used. In further embodiments, the depth information may already be provided with the image, e.g., when using an RGBD sensor for recording color and depth information. In even further embodiments, the spatial location may be measured directly, e.g., by a LIDAR or a radar.

In a second step (702), the machine learning system (70) determines a direction of light ($l$) shining on an object depicted by the image and the spatial coordinates. In the embodiment, this is achieved by providing the plurality of measurements to a neural network (nn) as shown in Figure 2, wherein the neural network is configured to determine the direction of light ($l$). In other embodiments, other methods may be used for determining the direction of the light ($l$).

In a third step (703), surface normal vectors ($n$) are determined for the measurements of the spatial locations. This is understood as taking the spatial locations of the measurements from the plurality of measurements and determining surface normal vectors ($n$) for these spatial locations, preferably for all spatial locations. The surface normal vectors ($n$) may be determined according to any known method, preferably they are obtained using neighboring spatial coordinates as described above.

In a fourth step (704), a shading ($s$) of the object is determined by the machine learning system and based on the determined surface normal vectors ($n$) and the determined direction of the light ($l$). Preferably, this is achieved by providing the determined surface normal vectors ($n$) and the determined direction of the light ($l$) to a trainable shader (73) of the machine learning system, wherein the trainable shader (73) is given by a neural network (nn) according to Figure 2. The direction of the light ($l$) and the surface normal vectors ($n$) may preferably be concatenated to serve as

input ($x_p$) to the neural network (nn). Preferably, a shading value is determined for each surface normal vector ($n$). The shading ($s$) is then the combination of all shading values, preferably organized in a single-channel (i.e., gray-scale) image.

In a fifth step (705), an albedo ($a$) is determined by the machine learning system (70) and by using the plurality of measurements ($p$) as input. Preferably, this is achieved by providing the plurality of measurements ($p$) as input ($x_p$) to a first part (71) of the machine learning system (70), wherein the first part is given by a neural network (nn) as shown in Figure 2. The neural network (nn) preferably determines an albedo value for each measurement of the plurality of measurements ($p$). The albedo value is preferably expressed in terms of an RGB pixel. Hence, the output of the neural network (nn) may be an RGB image characterizing the albedo ($a$).

In a sixth step (706), a reconstruction of the colors of the plurality of measurements ($p$) is determined based on the determined shading ($s$) and the determined albedo ($a$). This may preferably be achieved by a point-wise multiplication of the determined albedo ($a$) and the determined shading ($s$) as each shading value corresponds to an albedo value, wherein the correspondence is established through the measurement of the plurality of measurements ($p$) the albedo value and shading value were determined for respectively. If the albedo ($a$) is given in the form of a three-dimensional tensor, e.g., an RGB image and the shading ($s$) is given by a matrix, e.g., a gray-scale image, the shading ($s$) may be broadcasted along the color dimension.

In a seventh step (707), the machine learning system (70) is trained based on a first loss function, wherein the first loss function comprises a term characterizing a difference between the colors of the plurality of measurements ($p$) and the reconstruction of the colors of the plurality of measurements. The term may be characterized by the formula:

$$\mathcal{L}_{rec} = \left|I - \hat{I}\right|_2^2,$$

wherein $I$ are the color components of the point cloud and $\hat{I}$ is the reconstruction. Preferably, the term further characterizes a difference between the determined albedo and a desired albedo. The term may hence preferably be characterized by the formula:

$$\mathcal{L}_{rec} = \left|A - \hat{A}\right|_2^2 + \left|I - \hat{I}\right|_2^2,$$

wherein $A$ is the desired albedo and $\hat{A}$ is the determined albedo. Preferably, the first loss function further comprises a term that characterizes a difference of gradients of the determined albedo and gradients of a desired albedo. The term may be characterized by the formula:

$$\mathcal{L}_{grad} = \left|\nabla A - \nabla \hat{A}\right|_2^2,$$

wherein $\nabla A$ ist the gradient of the desired albedo (e.g., a ground truth albedo) and $\nabla \hat{A}$ is the gradient of determined albedo. Preferably, the first loss function further comprises a term that characterizes a cross correlation loss between the determined albedo and the desired albedo. The term may be characterized by the formula:

$$\mathcal{L}_{ccr} = \left|A_{RG} - \hat{A}_{RG}\right| + \left|A_{RB} - \hat{A}_{RB}\right| + \left|A_{BG} - \hat{A}_{BG}\right|,$$

wherein the lower index indicates the channels, e.g., $A_{RG}$ characterizes the red and green channels of the desired albedo, $\hat{A}_{RG}$ characterizes the red and green channel of the determined albedo. The first loss function may hence preferably be characterized by the formula:

$$\mathcal{L}_{first} = a_{rec} \cdot \mathcal{L}_{rec} + a_{grad} \cdot \mathcal{L}_{grad} + a_{ccr} \cdot \mathcal{L}_{ccr},$$

wherein $a_{rec}$, $a_{grad}$, and $a_{ccr}$ characterize factors of the respective terms, which may be considered hyperparameters of the method for training. Preferably, the factors may all be set to 1 but other values are possible as well. The first loss function or any combination of terms may also be scaled by the reciprocal of the number of measurements in the plurality of measurements.

The method (700) for training may be run iteratively, e.g., until a desired amount of iterations have passed.

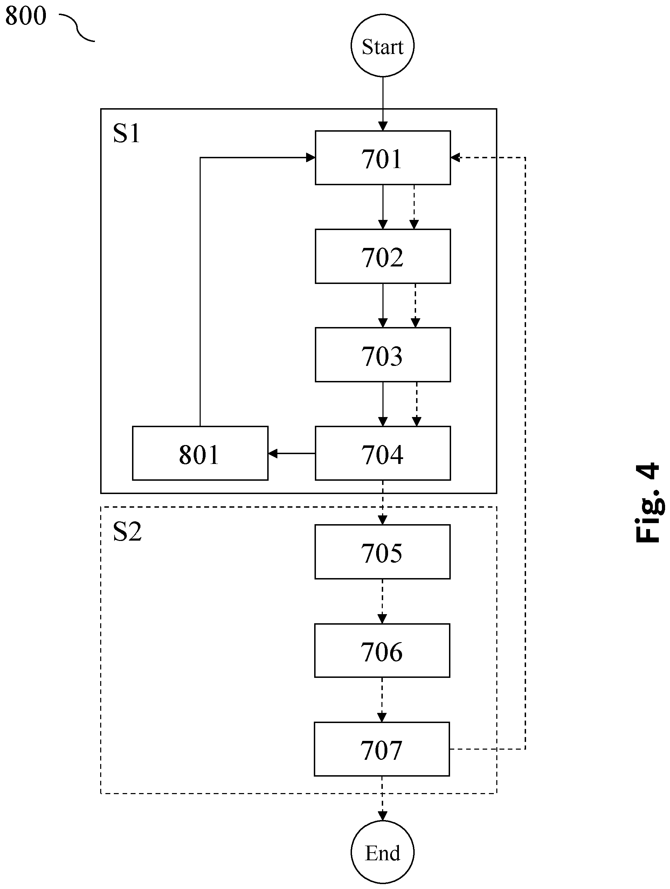

Figure 4 shows a preferred embodiment (800) of the method (700) for training the machine learning system.

This preferred embodiment may be understood as a two stage training process, wherein the second part (72) and the trainable shader (73) are first trained in a supervised fashion in a first stage (S1) and the first part (71) is then trained in a second stage (S2), wherein the second part (72) and the trainable shader (73) are not trained anymore in the second stage (S2).

In the preferred embodiment, the steps one (701) to four (704) are executed as depicted in Figure 1. Having determined a direction of the light (*l*) and a desired shading (*s*), the second part (72) and/or the trainable shader (73) are then trained (801) in an additional step based on a second loss function, wherein the second loss function comprises a term characterizing a difference between the determined light direction (*l*) and a desired light direction and/or wherein the loss function comprises a term characterizing a difference between the determined shading (*s*) and a desired shading. The loss term of the second loss function may especially be characterized by the formula:

$$\mathcal{L}_{shading} = \left| L - \hat{L} \right|_2^2 + \left| S - \hat{S} \right|_2^2,$$

Wherein *L* is the desired direction of the light, $\hat{L}$ is the determined direction of the light, *S* is the desired shading, and $\hat{S}$ is the determined shading. The term may especially be scaled, preferably by a reciprocal of the number of measurements in the plurality of measurements. Preferably, the loss term is the second loss function.

The first stage (S1) is preferably repeated iteratively, e.g., until a desired amount of iterations have passed.

After the first stage (S1), the first part (71) is then trained in the second stage (S2). For this, a shading (*s*) is determined as was done in the method (700) displayed in Figure 1. When training (707) based on the first loss function, however, only the parameters of the first part (71) are updated with parameters of the second part (72) and the trainable shader (73) being "frozen" in this second stage (72). The second stage (S2) may also be run iteratively, e.g., until a desired amount of iterations have passed. In the figure, a flow of information in the first stage (S1) is indicated by solid lines, while a flow of information in the second stage (S2) is indicated by dashed lines.

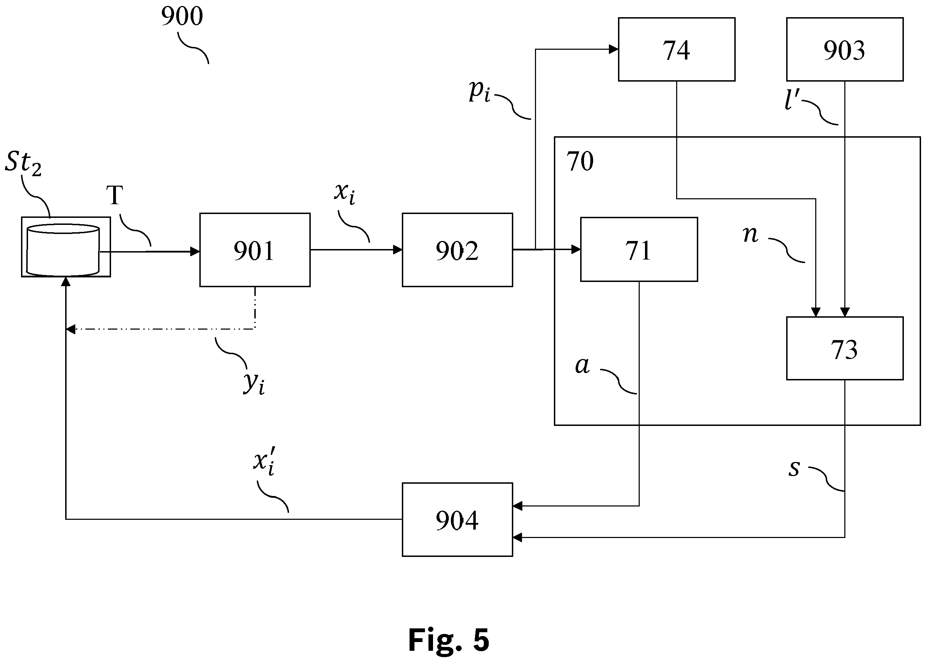

Figure 5 shows a computer-implemented method (900) for creating a training dataset (T) comprising images ($x_i$) for training an image classifier. The dataset (T) initially comprises at least one image ($x_i$), preferably a plurality of images ($x_i$). The dataset (T) is provided by a computer-implemented storage ($St_2$). In the method, a selection unit (901) selects an image ($x_i$) from the dataset (T), preferably at random. In the embodiment depicted in Figure 1, the image ($x_i$) is then forwarded to an optional spatial unit (902), which is configured to determine spatial locations for each pixel in the image ($x_i$). In other embodiments, the image ($x_i$) already comprises spatial locations for the pixels hence making the spatial unit (902) unnecessary in those embodiments. The spatial locations may be determined for the image ($x_i$) as described above. The result is a plurality of measurements (*p*). The plurality of measurements ($p_i$) is provided to the machine learning system (70) trained with a method (700, 800) as disclosed above.

A first part of the machine learning system (71) determines an albedo (*a*) from the plurality of measurements ($p_i$). A surface normal vector module (74) further determines surface normal vectors (*n*) based on the plurality of measurements ($p_i$). A light direction unit (903) selects a desired lighting direction (*l'*). The desired lighting direction (*l'*) may be selected as disclosed above. The trainable shader (73) then determines a shading (*s*) based on the surface normal vectors (*n*) and the desired lighting direction (*l'*). The shading (*s*) and the albedo (*a*) are forwarded to a reconstruction unit (904), which is configured to determine a reconstruction from an albedo (*a*) and a shading (*s*). The reconstruction unit (904) then determines a new image ( $x_i'$ ), e.g., by point-wise multiplication of the albedo (*a*) and the shading (*s*). The new image ( $x_i'$ ) is then added to the dataset (T).

In further embodiments, the image ($x_i$) is assigned a label ($y_i$) (also referred to as ground truth) in the dataset (T). In these embodiments, the label ($y_i$) may also be assigned to the new image ( $x_i'$ ) before adding it to the dataset (T).

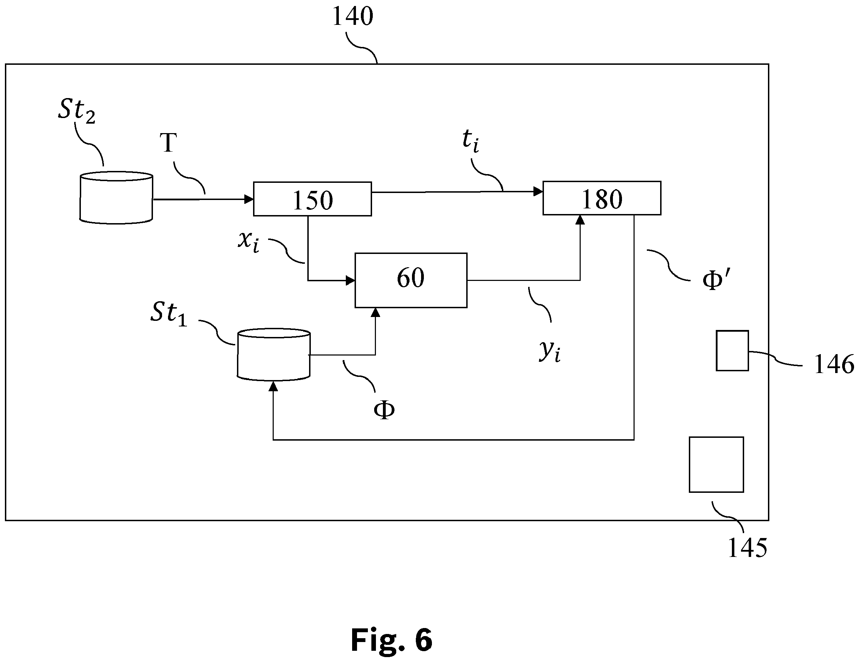

Figure 6 shows an embodiment of a training system (140) for training an image classifier (60) by means of the dataset (T).

For training, a training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the image classifier (60). The image classifier (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters (Φ') for the image classifier (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the image classifier (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the image classifier (60).

Furthermore, the training system (140) may comprise at least one processor (145) and at least one machine-readable storage medium (146) containing instructions which, when executed by the processor (145), cause the training system (140) to execute a training method according to one of the aspects of the invention.

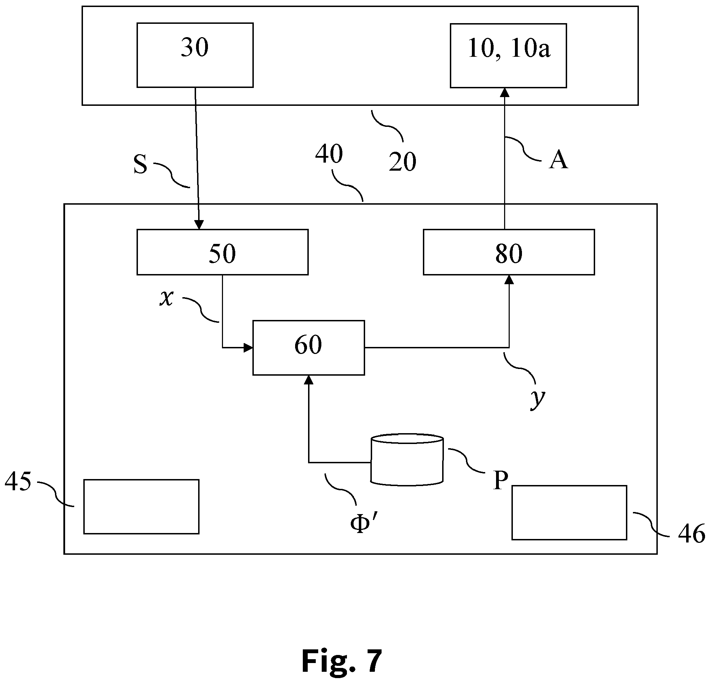

Figure 7 shows an embodiment of a control system (40) controlling an actuator (10) in its environment (20) based on an output (y) of the image classifier (60). The actuator (10) interacts with a control system (40). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals ($x$). Alternatively, in case of no receiving unit (50), each sensor signal (S) may directly be taken as an input signal ($x$). The input signal ($x$) may, for example, be given as an excerpt from the sensor signal (S). Alternatively, the sensor signal (S) may be processed to yield the input signal ($x$). In other words, the input signal ($x$) is provided in accordance with the sensor signal (S).

The input signal ($x$) is then passed on the image classifier (60).

The image classifier (60) is parametrized by parameters ($\Phi$), which are stored in and provided by a parameter storage ($St_1$).

The image classifier (60) determines an output signal ($y$) from the input signals ($x$). The output signal ($y$) comprises information that assigns one or more labels to the input signal ($x$). The output signal ($y$) is transmitted to an optional conversion unit (80), which converts the output signal ($y$) into the control signals (A). The control signals (A) are then transmitted to the actuator (10) for controlling the actuator (10) accordingly. Alternatively, the output signal ($y$) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

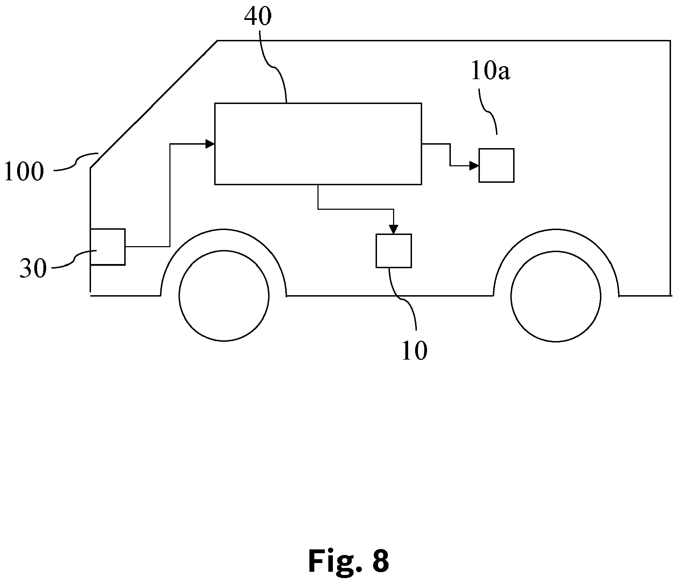

Figure 8 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The image classifier (60) may be configured to detect objects in the vicinity of the at least partially autonomous robot based on the input image ($x$). The output signal ($y$) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

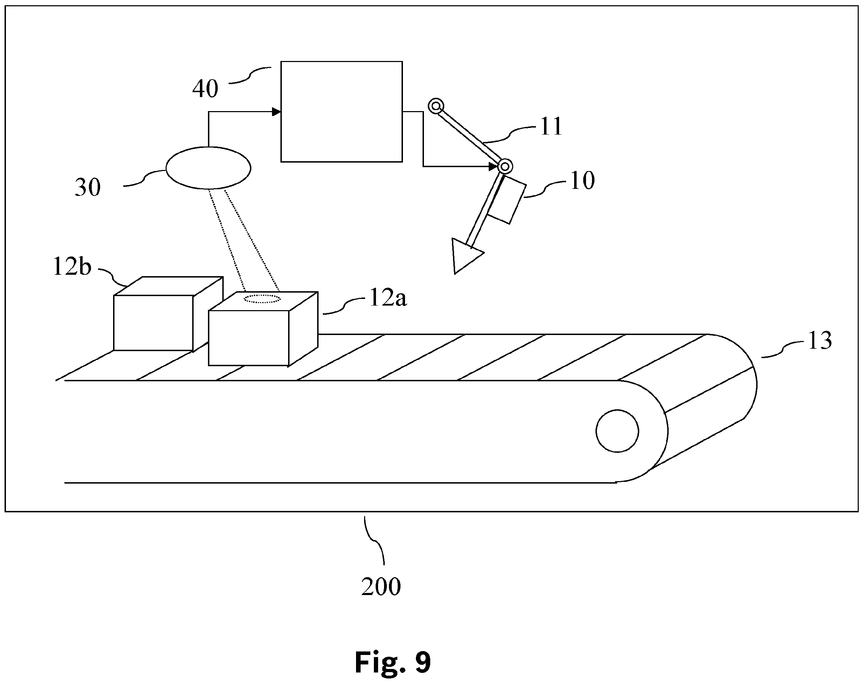

Figure 9 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken and/or exhibits a defect. The actuator (10) may then be controlled as to remove the manufactured product from the transportation device.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method (700, 800) for training a machine learning system (70), wherein the machine learning system (70) is configured for determining an albedo ($a$) and a shading ($s$) of an object, the method (700, 800) for training comprising the steps of:

• Obtaining (701) a plurality of measurements ($p$), wherein a measurement from the plurality of measurements ($p$) characterizes a measurement of spatial location of a point located on an object and a measurement of a color of the object at the point;
• Determining (702), by the machine learning system (70), a direction of light ($l$) shining on the object by using the plurality of measurements ($p$) as input;
• Determining (703) surface normal vectors ($n$) at the measurements of spatial locations;
• Determining (704), by the machine learning system (70), a shading ($s$) of the object based on the determined surface normal vectors ($n$) and the determined direction of the light ($l$);
• Determining (705), by the machine learning system (70), an albedo ($a$) by using the plurality of measurements ($p$) as input;
• Determining (706) a reconstruction of the colors of the plurality of measurements ($p$) based on the determined shading ($s$) and the determined albedo ($a$);
• Training (707) the machine learning system (70) based on a first loss function, wherein the first loss function comprises a term characterizing a difference between the colors of the plurality of measurements ($p$) and the reconstruction of the colors of the plurality of measurements.

2. Method (700, 800) according to claim 1, wherein the albedo ($a$) is determined by a providing the plurality of measurements ($p$) as input to a first part (71), preferably a neural network (nn), of the machine learning system (70) and providing an output of the first part (71) as albedo ($a$) and/or wherein the direction of light ($l$) is determined by providing the plurality of measurements ($p$) to a second part (72), preferably a neural network (nn), of the machine learning system (70) and providing an output of the second part (72) as direction of the light ($l$) and/or wherein the shading ($s$) is determined by providing the determined surface normal vectors ($n$) and the determined direction of the light ($l$) to a trainable shader (73) and providing an output of the trainable shader (73) as shading ($s$).

3. Method (700, 800) according to claim 2, wherein training the machine learning system (70) based on the first loss function is achieved by updating parameters of the first part (71) and/or the second part (72) and/or the trainable shader (73) according to a negative gradient of a loss value determined from the first loss function with respect to the parameters.

4. Method (700, 800) according to any one of the claims 1 to 3, wherein the first loss function further comprises a term that characterizes a difference of gradients of the determined albedo ($a$) and gradients of a desired albedo and/or wherein the first loss function further comprises a term that characterizes a cross correlation loss between the determined albedo ($a$) and the desired albedo.

5. Method (700, 800) according to any one of the claims 1 to 4, wherein the second part (72) and/or the trainable shader (73) are additionally trained based on a second loss function, wherein the second loss function comprises a term characterizing a difference between the determined light direction ($l$) and a desired light direction and/or wherein the loss function comprises a term characterizing a difference between the determined shading ($s$) and a desired shading.

6. Method (700, 800) according to claim 5, wherein the second part (72) and the trainable shader (73) are trained (801) based on the second loss function in a first stage (S1) and the first part (71) is then trained based on the first loss function in a subsequent second stage (S2).

7. Computer-implemented method for determining an albedo ($a$) and a shading ($s$) of an object using a machine learning system (70) trained with the method according to anyone of the claims 1 to 6.

8. Computer-implemented method (900) for creating a training dataset (T) comprising images ($x_i$) for training an image classifier (60), wherein the method (900) comprises the steps of:

• Obtaining a plurality of measurements ($p_i$), wherein a measurement from the plurality of measurements ($p_i$) characterizes a measurement of spatial location of a point located on an object and a measurement of a color of the object at the point;
• Determining an albedo ($a$) using a machine learning system (70) that has been trained with the method (700, 800) according to anyone of the claims 1 to 6;
• Determining surface normal vectors ($n$) at the measurements of spatial locations;
• Selecting a desired lighting direction ($l'$);
• Determining, by the machine learning system (70), a shading ($s$) based on the determined surface normal vectors (*n*) and the desired direction of the light (*l'*);

• Determining an image ( $x'_i$ ) based on the determined albedo and the determined shading.

• Adding the image ( $x'_i$ ) to the training dataset (T).

9. Computer-implemented method for training an image classifier (60) comprising the steps of:

• Obtaining a training image (*x_i*) and spatial locations for pixels of the training image (*x_i*);
• Determining an albedo by providing the pixels and the corresponding special locations as input to a machine learning system (70), wherein the machine learning system (70) has been trained with the method according to any one of the claims 1 to 6;
• Training the image classifier (60) using the albedo as input to the image classifier (60).

10. Computer-implemented method for classifying an image (*x*) comprising the steps of:

• Obtaining an image (*x*) and spatial locations for pixels of the image (*x*);
• Determining an albedo by providing the pixels and the corresponding special locations as input to a machine learning system, wherein the machine learning system has been trained with the method according to any one of the claims 1 to 6;
• Classifying the image (*x*) by using the determined albedo as input to an image classifier (60) that has been trained with the method according to claim 9.

11. Training system (140), which is configured to carry out the training method according to any one of the claims 1 to 6 or 9.

12. Control system (40), which is configured to carry out the method according to claim 10, wherein the control system (40) determines a control signal (A) based on the classification of the image (*x*), wherein the control signal (A) is configured to control an actuator (10) and/or a display (10a).

13. Computer program that is configured to cause a computer to carry out the method according to any one of the claims 1 to 10 with all of its steps if the computer program is carried out by a processor (45, 145).

14. Machine-readable storage medium (46, 146) on which the computer program according to claim 13 is stored.

**Fig. 1**

EP 4 451 216 A1

**Fig. 2**

700

```
      ┌─────────┐
      │  Start  │
      └─────────┘
           │
           ▼
    ┌──────────────┐
    │     701      │
    └──────────────┘
           │
           ▼
    ┌──────────────┐
    │     702      │
    └──────────────┘
           │
           ▼
    ┌──────────────┐
    │     703      │
    └──────────────┘
           │
           ▼
    ┌──────────────┐
    │     704      │
    └──────────────┘
           │
           ▼
    ┌──────────────┐
    │     705      │
    └──────────────┘
           │
           ▼
    ┌──────────────┐
    │     706      │
    └──────────────┘
           │
           ▼
    ┌──────────────┐
    │     707      │
    └──────────────┘
           │
           ▼
      ┌─────────┐
      │   End   │
      └─────────┘
```

Fig. 3

Fig. 4

**Fig. 5**

EP 4 451 216 A1

**Fig. 6**

**Fig. 7**

**Fig. 8**

**Fig. 9**

EP 4 451 216 A1

## EUROPEAN SEARCH REPORT

Europäisches Patentamt
European Patent Office
Office européen des brevets

**Application Number**

**EP 23 16 8780**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YU YE ET AL: "InverseRenderNet: Learning Single Image Inverse Rendering", 2019 IEEE/CVF CONFERENCE ON COMPUTER VISION AND PATTERN RECOGNITION (CVPR), IEEE, 15 June 2019 (2019-06-15), pages 3150-3159, XP033686752, DOI: 10.1109/CVPR.2019.00327 [retrieved on 2020-01-08] * abstract; figures 1,7 * * sections "1. Introduction", "3. Preliminaries", "4.1. Trainable encoder-decoder", "4.2. Implicit lighting prediction", "5.1. Self-supervision via differentiable rendering", "7. Evaluation" * ----- | 1-14 | INV. G06T7/90 G06T15/00 |
| A | PANDEY ROHIT ROHITPANDEY@GOOGLE COM ET AL: "Total relighting", ACM TRANSACTIONS ON GRAPHICS, ACM, NY, US, vol. 40, no. 4, 19 July 2021 (2021-07-19), pages 1-21, XP058628537, ISSN: 0730-0301, DOI: 10.1145/3450626.3459872 * abstract; figures 3-5 * * sections "3.2 Relighting Module"; "4.1 Relighting Module Loss Functions" * ----- | 1-14 | TECHNICAL FIELDS SEARCHED (IPC) G06T |

The present search report has been drawn up for all claims

| Place of search | Date of completion of the search | Examiner |
|---|---|---|
| Munich | 28 September 2023 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 451 216 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JANNER et al.** *Self-Supervised Intrinsic Image Decomposition,* 2018, https://arxiv.org/pdf/1711.03678.pdf
- **RANFTL et al.** *Towards Robust Monocular Depth Estimation: Mixing Datasets for Zero-shot Cross-dataset Transfer,* 2020, https://arxiv.org/abs/1907.01341v3
- **QI et al.** *PointNet: Deep Learning on Point Sets for 3D Classification and Segmentation,* 2017, https://arxiv.org/pdf/1612.00593.pdf